# EUROPEAN PATENT APPLICATION

(11) **EP 4 425 009 A1**
(43) Date of publication of application: **04.09.2024**
(21) Application number: 24158362.4
(22) Date of filing: 19.02.2024
(51) Int. Cl.: F16F 9/20, F16F 9/18, F16F 9/32, F16F 9/46, F16F 9/54, B62K 25/28, B62K 25/04

(54) **REAR SHOCK ABSORBER FOR MOTORCYCLE**

(30) Priority: 01.03.2023 IT 202300003642
(71) Applicant: Bitubo S.r.l., 35037 Teolo (PD) (IT)
(72) Inventor: MARDOLLO, Gianni, 35035 MESTRINO PD (IT)
(74) Representative: Modiano, Micaela Nadia

(57) **Abstract**

A shock absorber (10) for a motorcycle, comprising:
- a first coupling element (11), arranged at a first longitudinal end (12) of said shock absorber (10),
- a head (13) proximate to the first coupling element (11),
- a first tubular element (14) extending from the head (13),
- a second tubular element (15) extending from the head (13), concentric to the first tubular element (14) and internal to it, the second tubular element (15) forming at least one chamber (16, 17, 18) for a working fluid,
- a first stem (19), which can slide within the second tubular element (15), the first stem (19) passing through the head (13),
- a pumping assembly (20), which can slide within the second tubular element (15) and is at least partially interposed between the first stem (19) and the second stem (21),
- the second stem (21), which can slide within the second tubular element (15),
- a bottom (22), crossed by the second stem (21),
- a second coupling element (23), arranged at the end of the second stem (21) that is opposite to the end adjacent to the pumping assembly (20), the second coupling element (23) being arranged at a second longitudinal end (24) of the shock absorber (10),
- at least one compensation chamber (25) for the working fluid, in fluidic connection with the at least one chamber (16, 17, 18) of the working fluid, the compensation chamber (25) being arranged within the footprint defined:
- longitudinally by the distance between the first coupling element (11) and the second coupling element (23),
- radially by the first tubular element (14).

## Description

The present invention relates to a rear shock absorber for a motorcycle.

The invention is applicable, in the industrial field, in particular in the field of racing motorcycles.

The shock absorber is a device, usually integrated into the suspension of a vehicle, that is adapted to dampen/slow down the movement of the suspension, in order to improve driving comfort, in particular over rough terrain, by improving vehicle stability.

Usually, rear shock absorbers for motorcycles are of the hydraulic type and can be of the monotube or twin tube type.

In particular, twin tube shock absorbers have a substantially vertical configuration for use and usually comprise:
- an upper coupling element,
- an outer cylinder, within which an inner cylinder is at least partially inserted, in fluidic communication with the outer one,
- the inner cylinder containing an oil chamber,
- a stem-piston which can slide within the inner cylinder and is provided with a piston, optionally with a reed valve, arranged between a pressurized chamber and the oil chamber,
- at least one compensation valve, fluidically interposed between the inner cylinder and the outer cylinder,
- a lower coupling element.

As a result of the movement of the stem due to a compression (or extension) of the shock absorber, the piston and consequently the oil move from the inner cylinder to the outer cylinder (or vice versa), through the compensation valve, and/or from the oil chamber to the pressurized chamber (or vice versa), through the reed valve.

Normally, during the operation of a shock absorber, its operating temperature varies depending on various physical factors and weather conditions.

As a result of changes in the temperature of the shock absorber, changes in the volume of the oil contained within it occur.

To compensate for this effect, shock absorbers are known which are provided with a suitable compensation chamber, which allows the volume of the oil to expand as the temperature increases (and contract as the temperature decreases), while simultaneously controlling the pressures inside the shock absorber within a predefined range.

The compensation chamber is in fluidic communication with the oil chamber and in turn contains an inert gas for pressurizing the oil circuit itself.

This background art has some drawbacks.

In fact, the compensation chamber is generally an element that is external to the shock absorber and integral with it or connected to it by means of a flexible tube.

This results in the occupation of considerable space and the need to provide a volume for its accommodation.

Moreover, the presence of a shock absorber with an external compensation chamber causes time-consuming and awkward operations for its assembly and fixing to the motorcycle, besides causing an unattractive visual impact.

The aim of the present invention is to provide a rear shock absorber for a motorcycle that is capable of improving the background art in one or more of the above aspects.

Within this aim, an object of the invention is to provide a rear shock absorber for a motorcycle that allows compensation of the oil volume variation without the need for a compensation chamber which is external to the shock absorber itself.

Another object of the invention is to provide a rear shock absorber for a motorcycle that occupies less volume, for an equal performance, than similar shock absorbers of the known type.

A further object of the invention is to provide a rear shock absorber for a motorcycle that allows faster and easier installation thereof, compared to similar shock absorbers of the known type while producing a pleasing visual impact.

Moreover, an object of the present invention is to overcome the drawbacks of the background art in a manner that is alternative to any existing solutions.

Not least object of the invention is to provide a rear shock absorber for a motorcycle that is highly reliable, relatively easy to provide, and at competitive costs.

This aim, as well as these and other objects that will become better apparent hereinafter, are achieved by a shock absorber for a motorcycle, characterized in that it comprises:
- a first coupling element, arranged at a first longitudinal end of said shock absorber,
- a head proximate to said first coupling element,
- a first tubular element extending from said head,
- a second tubular element extending from said head, concentric to said first tubular element and internal to it, said second tubular element forming at least one chamber for a working fluid,
- a first stem, which can slide within said second tubular element, said first stem passing through said head,
- a pumping assembly, which can slide within said second tubular element and is at least partially interposed between said first stem and said second stem,
- said second stem, which can slide within said second tubular element,
- a bottom, crossed by said second stem,
- a second coupling element, arranged at the end of said second stem that is opposite to the end adjacent to said pumping assembly, said second coupling element being arranged at a second longitudinal end of said shock absorber,
- at least one compensation chamber for said working fluid, in fluidic connection with said at least one chamber of said working fluid, said compensation chamber being arranged within the footprint defined:
- longitudinally by the distance between said first coupling element and said second coupling element,
- radially by said first tubular element.

Further characteristics and advantages of the invention will become better apparent from the description of a preferred but not exclusive embodiment of a rear shock absorber for a motorcycle according to the invention, illustrated by way of non-limiting example in the accompanying drawings, wherein:

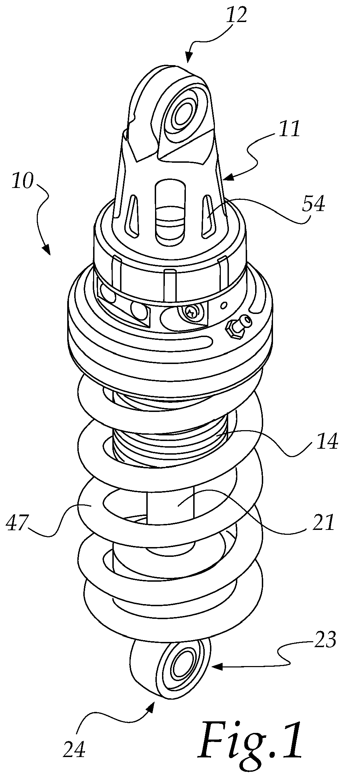

Figure 1 is a general perspective view of a rear shock absorber for a motorcycle, according to the invention;

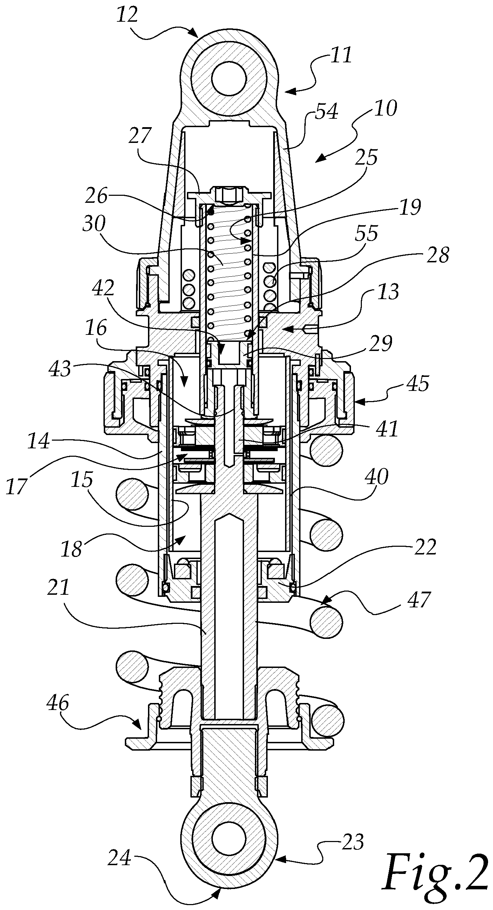

Figure 2 is a view, in a first lateral cross-section, of the shock absorber of Figure 1;

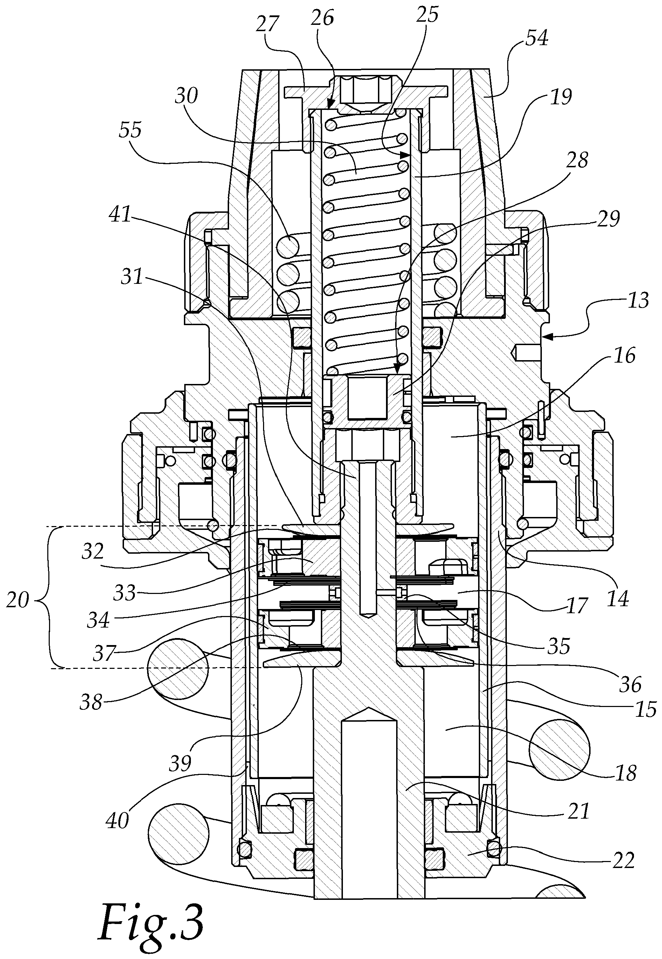

Figure 3 is an enlarged-scale view of a portion of the cross-section of Figure 2;
Figure 4 is a view of a portion of the shock absorber of Figure 1 in a second lateral cross-section in a first operating configuration;
Figure 5 is a sectional view taken along the line V-V of Figure 4;
Figure 6 is a sectional view taken along the line VI-VI of Figure 5;
Figure 7 is a sectional view taken along the line VII-VII of Figure 5;
Figure 8 is a view of a portion of the shock absorber of Figure 1 in the second lateral cross-section in a second operating configuration;
Figure 9 is a sectional view taken along the line IX-IX of Figure 8;
Figure 10 is a sectional view taken along the line X-X of Figure 9;
Figure 11 is a sectional view taken along the line XI-XI of Figure 9;
Figure 12 is a sectional view taken along the line XII-XII of Figure 9.

With reference to the figures, a rear shock absorber for a motorcycle, according to the invention, is generally designated by the reference numeral 10.

The shock absorber 10 comprises:
- a first coupling element 11, arranged at a first longitudinal end 12 of the shock absorber 10,
- a head 13 proximate to the first coupling element 11,
- a first tubular element 14 extending from the head 13,
- a second tubular element 15, extending from the head 13, concentric to the first tubular element 14 and internal to it, the second tubular element 15 forming at least one chamber 16, 17, 18 for a working fluid (not shown in the figures),
- a first stem 19, which can slide inside the second tubular element 15, the first stem 19 passing through the head 13,
- a pumping assembly 20, which can slide within the second tubular element 15 and is at least partially interposed between the first stem 19 and a second stem 21,
- the second stem 21, which can slide within the second tubular element 15,
- a bottom 22, which is crossed by the second stem 21,
- a second coupling element 23, which is arranged at the end of the second stem 21 that is opposite to the one adjacent to the pumping assembly 20, the second coupling element 23 being arranged at a second longitudinal end 24 of the shock absorber 10,
- at least one compensation chamber 25 for the working fluid, in fluidic connection with the at least one chamber 16, 17, 18 of the working fluid.

In particular, the compensation chamber 25 is arranged within the footprint defined:
- longitudinally, by the distance between the first coupling element 11 and the second coupling element 23,
- radially, by the first tubular element 14.

In the embodiment shown in the figures, the compensation chamber 25 is one and is contained within the first stem 19.

However, in other embodiments, not shown in the figures, the compensation chamber might be arranged inside the second stem 21, or there might be two compensation chambers: one in the first stem 19 and one in the second stem 21.

In particular, the compensation chamber 25 is contained within the first stem 19 and is closed:
- at a first end 26 thereof, which coincides with one end of the first stem 19, by a plug 27,
- at a second end 28 thereof, by a piston 29, which can slide inside the first stem 19.

Advantageously, the compensation chamber 25 contains means 30 for pressurizing the working fluid and in particular its circuit.

The pressurization means 30 are, for example, elastic means constituted by a first helical spring extending along the entire compensation chamber 25 from the plug 27 to the piston 29.

In another embodiment, not shown in the figures, the pressurization means 30 comprise a gas.

Advantageously, the pumping assembly 20 comprises a plurality of elements arranged in a pack, parallel and coaxial to the first stem 19 and to the second stem 21.

This plurality of elements of the pumping assembly 20 comprises, in the following order:
- a substantially flat first element 31, adjacent to the first stem 19,
- one or more first laminas/disks 32,
- a first perforated piston 33,
- one or more second laminas/disks 34,
- a spacer 35,
- one or more third laminas/disks 36,
- a second perforated piston 37,
- one or more fourth laminas/disks 38,
- a second substantially flat element 39, adjacent to the second stem 21.

The first laminas/disks 32, second laminas/disks 34, third laminas/disks 36, and fourth laminas/disks 38 are arranged so as to allow the working fluid to pass as a result of a movement of the pumping assembly 20.

In particular, within the second tubular element 15 there are three chambers for the working fluid, in the following order:
- a first chamber 16, with variable volume, arranged between the head 13 and the first perforated piston 33,
- a second chamber 17, with constant volume, arranged between the first perforated piston 33 and the second perforated piston 37,
- a third chamber 18, with variable volume, arranged between the second perforated piston 37 and the bottom 22.

Advantageously, between the first tubular element 14 and the second tubular element 15 there is an interspace 40 that allows the passage of the working fluid.

The second stem 21 has a longitudinal appendage 41, which is at least partially perforated and is coaxial to the first stem 19 and the second stem 21.

The longitudinal appendage 41 passes through the pumping assembly 20 and is at least partially inserted within the first stem 19, ending proximate to the piston 29.

Within the first stem 19, between the free end of the longitudinal appendage 41 and the piston 29, there is a portion 42 with variable volume, adapted to contain the working fluid as a result of expansion due to thermal expansion.

The longitudinal appendage 41 is provided with a passage 43 adapted for fluidic communication between the second chamber 17 and the portion 42, through an opening 44 located on the spacer 35.

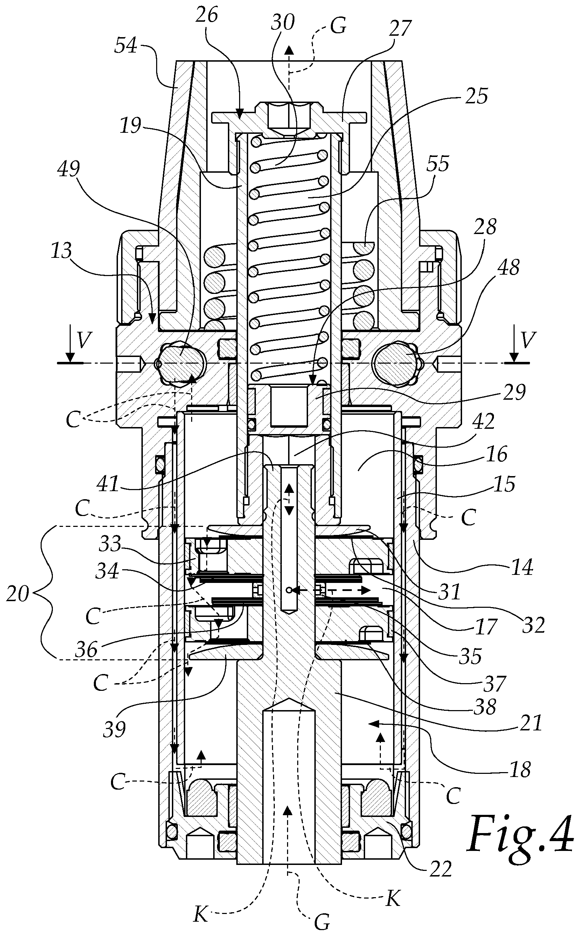

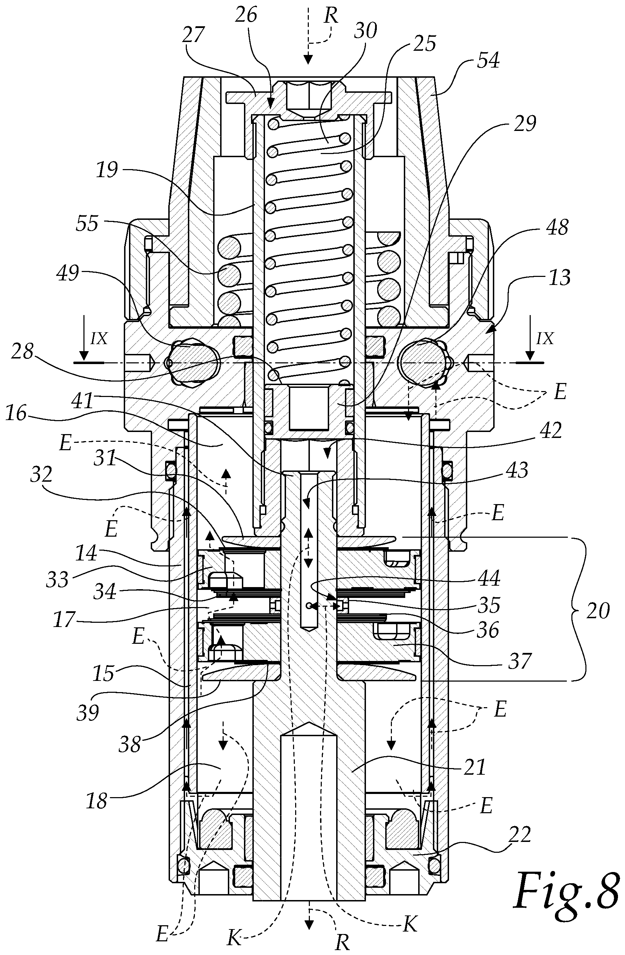

Thus, in case of thermal expansion due to an increase in temperature, the working fluid can expand freely, passing from the second chamber 17 to the portion 42 through the passage 43, along the direction of the arrows K in Figures 4 and 8.

When the temperature decreases, the working fluid retracts and tends to move from the portion 42 to the second chamber 17, along to the direction of the arrows K of Figures 4 and 8.

Due to the elastic return of the first spring 30 and to its thrust against the piston 29, the working fluid maintains the design pressure.

The head 13 is associated with a ring 45, which surrounds the first tubular element 14.

The second coupling element 23 is associated with an annular element 46, which is coaxial to the ring 45 and is directed toward it.

The shock absorber 10 is provided with a second helical spring 47, which is arranged between the ring 45 and the annular element 46 and surrounds the first tubular element 14 and the second stem 21.

The first coupling element 11 is associated with a cap 54, which has a substantially tubular and at least partially frustum-shaped contour, is coaxial with the first stem 19 and ends with the head 13.

A third helical spring 55, for preloading, is arranged within the cap 54 and surrounds the first stem 19.

The shock absorber 10 comprises two valves for adjusting the damping of the shock absorber 10, respectively:
- a first valve 48, for adjusting extension,
- a second valve 49, for adjusting compression.

The first valve 48 and the second valve 49 are one-way valves, arranged at the head 13, on either side of the first stem 19, on a plane that is substantially perpendicular to the latter.

The first valve 48 and the second valve 49 are in fluidic communication with the interspace 40 and the first chamber 16 and are arranged so as to affect the passage between the first chamber 16 and the interspace 40.

The first valve 48 and the second valve 49 are accessible from the outside of the shock absorber 10 and are adjustable by means of a hex key.

In particular, Figures 4 to 7 show the behavior of the working fluid during the compression step of the shock absorber.

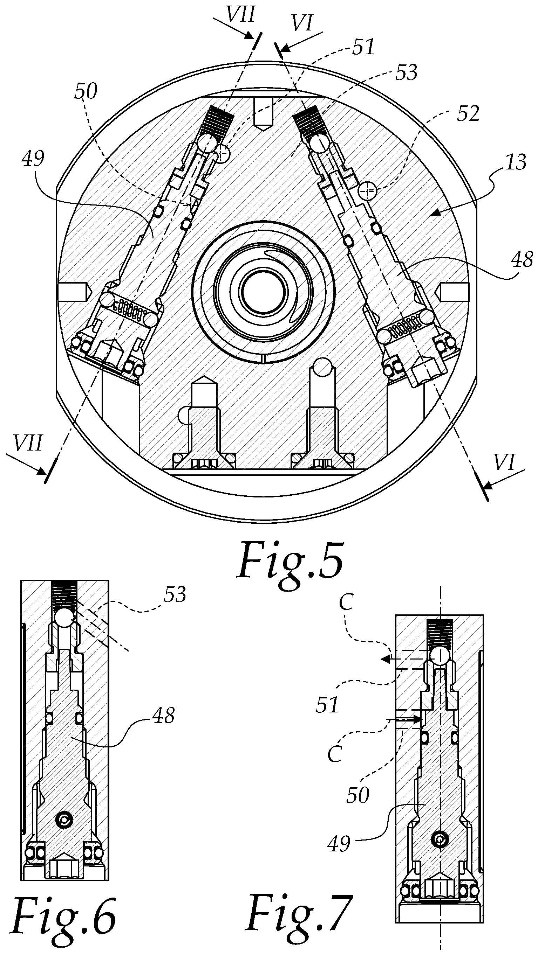

In the compression step, the second stem 21 and the pumping assembly 20 move as indicated by the arrows G of Figure 4, while the working fluid moves as indicated by the arrows C in Figures 4 and 7.

In this step, the fluid moves from the first chamber 16, at high pressure, toward the second chamber 17 and the third chamber 18, at low pressure, moving through the interspace 40 and the pumping assembly 20.

In the compression step, the first valve 48 is at rest, while the second valve 49 is active and, as shown in Figures 5 and 7, the working fluid enters the second valve 49 through a first through hole 50 in communication with the first chamber 16 and exits through a second through hole 51 in communication with the interspace 40.

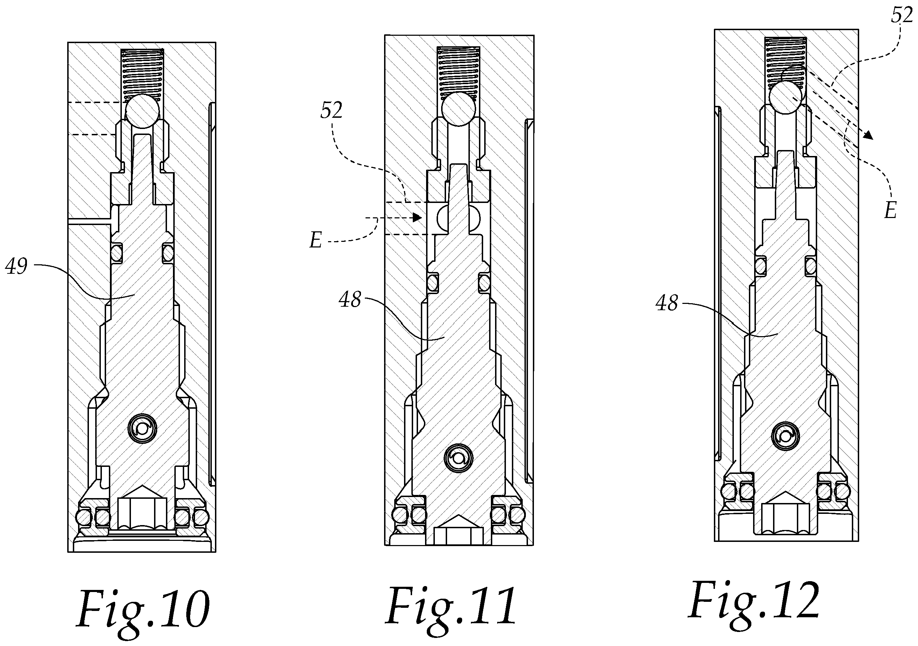

In particular, Figures 8 to 12 show the behavior of the working fluid during the extension step of the shock absorber.

In the extension step, the second stem 21 and the pumping assembly 20 move as indicated by the arrows R of Figure 8, while the working fluid moves as indicated by the arrows E of Figures 8, 11 and 12.

In this step, the fluid moves from the third chamber 18, at high pressure, toward the second chamber 17 and the first chamber 16, at low pressure, moving through the interspace 40 and the pumping assembly 20.

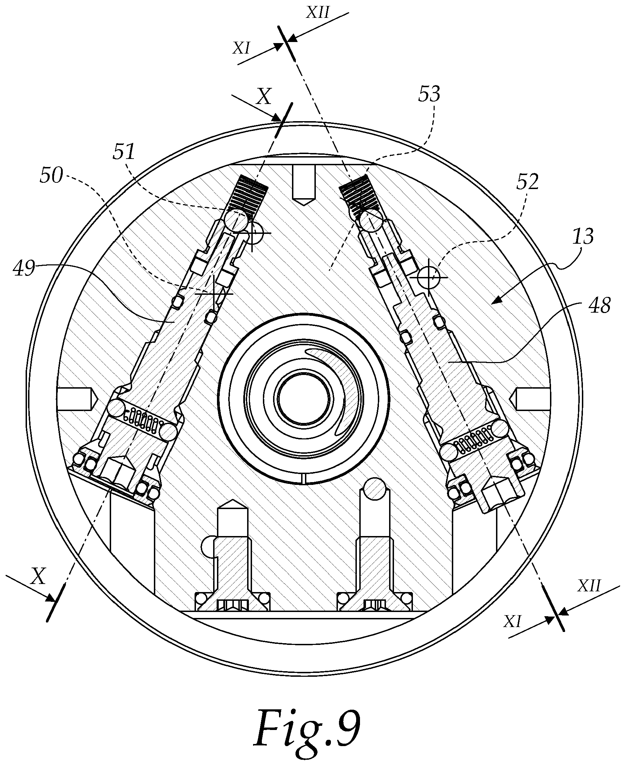

In the extension step, the second valve 49 is at rest while the first valve 48 is active and, as shown in Figures 9, 10 and 11, the working fluid enters the first valve 48 through a third through hole 52 in communication with the interspace 40 and exits through a fourth through hole 53 in communication with the first chamber 16.

By varying the adjustment on the first valve 48 and on the second valve 49, the operator can change the damping of the shock absorber by altering the passage of the working fluid between the first chamber 16 and the interspace 40, or vice versa.

In practice it has been found that the invention achieves the intended aim and objects, providing a rear shock absorber for a motorcycle that allows compensation for oil volume variation without the need for a compensation chamber that is external to the shock absorber itself.

The invention provides a rear shock absorber for motorcycles that occupies a smaller volume, for an equal performance, than similar shock absorbers of the known type.

Moreover, the invention provides a rear shock absorber for a motorcycle that allows quicker and easier installation thereof, compared to similar shock absorbers of the known type, while producing a pleasing visual impact.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102023000003642 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A shock absorber (10) for a motorcycle, **characterized in that** it comprises:
- a first coupling element (11), arranged at a first longitudinal end (12) of said shock absorber (10),
- a head (13) proximate to said first coupling element (11),
- a first tubular element (14) extending from said head (13),
- a second tubular element (15) extending from said head (13), concentric to said first tubular element (14) and internal to it, said second tubular element (15) forming at least one chamber (16, 17, 18) for a working fluid,
- a first stem (19), which can slide within said second tubular element (15), said first stem (19) passing through said head (13),
- a pumping assembly (20), which can slide within said second tubular element (15) and is at least partially interposed between said first stem (19) and said second stem (21),
- said second stem (21), which can slide within said second tubular element (15),
- a bottom (22), crossed by said second stem (21),
- a second coupling element (23), arranged at the end of said second stem (21) that is opposite to the end adjacent to said pumping assembly (20), said second coupling element (23) being arranged at a second longitudinal end (24) of said shock absorber (10),
- at least one compensation chamber (25) for said working fluid, in fluidic connection with said at least one chamber (16, 17, 18) of said working fluid, said compensation chamber (25) being arranged within the footprint defined:
- longitudinally by the distance between said first coupling element (11) and said second coupling element (23),
- radially by said first tubular element (14).

2. The shock absorber (10) according to claim 1, **characterized in that** said compensation chamber (25) is contained within said first stem (19) and is closed:
- at a first end thereof (26), which coincides with an end of said first stem (19), by a plug (27),
- at a second end thereof (28), by a piston (29) which can slide within said first stem (19).

3. The shock absorber (10) according to claim 1, **characterized in that** said compensation chamber (25) contains means (30) for pressurizing said working fluid.

4. The shock absorber (10) according to claim 1, **characterized in that** said pumping assembly (20) comprises a plurality of elements arranged in a pack, which are parallel and coaxial to said first stem (19) and said second stem (21), said plurality of elements comprising in the following order:
- a first substantially flat element (31), adjacent to said first stem (19),
- one or more first laminas/disks (32),
- a first perforated piston (33),
- one or more second laminas/disks (34),
- a spacer (35),
- one or more third laminas/disks (36),
- a second perforated piston (37),
- one or more fourth laminas/disks (38),
- a second substantially flat element (39), adjacent to said second stem (21).

5. The shock absorber (10) according to claim 4, **characterized in that** said one or more first laminas/disks (32), said one or more second laminas/disks (34), said one or more third laminas/disks (36) and said one or more fourth laminas/disks (38) are arranged so as to allow the passage of said working fluid following a movement of said pumping assembly (20).

6. The shock absorber (10) according to claim 1, **characterized in that** inside said second tubular element (15) there are three chambers for said working fluid, in the following order:
- a first chamber (16), with variable volume, arranged between said head (13) and said first perforated piston (33),
- a second chamber (17), with constant volume, arranged between said first perforated piston (33) and said second perforated piston (37),
- a third chamber (18), with variable volume, arranged between said second perforated piston (37) and said bottom (22).

7. The shock absorber (10) according to claim 6, **characterized in that** between said first tubular element (14) and said second tubular element (15) there is an interspace (40) for the passage of said working fluid.

8. The shock absorber (10) according to claim 2, **characterized in that** said second stem (21) has a longitudinal appendage (41) which is at least partially perforated and is coaxial to said first stem (19) and to said second stem (21), said longitudinal appendage (41) passing through said pumping assembly (20) and being at least partially inserted within said first stem (19) and ending proximate to said piston (29).

9. The shock absorber (10) according to claim 8, **characterized in that** inside said first stem (19), between the free end of said longitudinal appendage (41) and said piston (29), there is a portion (42) with variable volume, adapted to contain said working fluid as a result of an expansion thereof, said longitudinal appendage (41) having a passage (43) adapted for fluidic communication between said second chamber (17) and said portion (42) through an opening (44) located on said spacer (35).

10. The shock absorber (10) according to claim 1, **characterized in that** said head (13) is associated with a ring (45), which surrounds said first tubular element (14), and said second coupling element (23) is associated with an annular element (46) which is coaxial to said ring (45) and directed toward it, said shock absorber (10) being provided with a second helical spring (47) arranged between said ring (45) and said annular element (46), said second helical spring (47) surrounding said first tubular element (14) and said second stem (21).

11. The shock absorber (10) according to claim 3, **characterized in that** said means (30) for pressurizing comprise a first helical spring.

12. The shock absorber (10) according to claim 11, **characterized in that** said first coupling element (11) is associated with a cap (54) having a substantially tubular contour, which is coaxial to said first stem (19) and ends with said head (13), a third helical spring (55) being arranged within said cap (54) and surrounding said first stem (19).

13. The shock absorber (10) according to claim 7, **characterized in that** it comprises two valves for damping adjustment, respectively:
- a first valve (48) for extension adjustment,
- a second valve (49) for compression adjustment.

14. The shock absorber (10) according to claim 13, **characterized in that** said first valve (48) and said second valve (49) are one-way valves, arranged at said head (13), on either side of said first stem (19), on a plane that is substantially perpendicular to the latter.

15. The shock absorber (10) according to claim 13, **characterized in that** said first valve (48) and said second valve (49) are in fluidic communication with said interspace (40) and said first chamber (16) and are arranged so as to affect the passage between said first chamber (16) and said interspace (40).

16. The shock absorber (10) according to claim 13, **characterized in that** said first valve (48) and said second valve (49) are accessible from the outside of said shock absorber (10) and adjustable by means of a hex key.
